# EUROPEAN PATENT SPECIFICATION

(11) **EP 1 243 683 B1**
(45) Date of publication and mention of the grant of the patent: **25.07.2007**
(21) Application number: 02006373.1
(22) Date of filing: 21.03.2002
(51) Int. Cl.: D05B 23/00, B65G 47/90

(54) **Method and apparatus for automatic pick up of hosiery articles from a container**
Verfahren und Vorrichtung zum Entnehmen von Strumpfwaren aus einem Behälter
Procédé et appareillage pour le prélèvement automatique d'articles de bonneterie d'un récipient

(30) Priority: 21.03.2001 IT PI010022
(43) Date of publication of application: 25.09.2002
(73) Proprietor: SANTONI S.p.A., 25135 Brescia (IT)
(72) Inventor: Manini, Benito, 50144 Firenze (IT)
(74) Representative: Celestino, Marco

(56) References cited:
- AT-B- 385 015
- US-A- 5 511 501
- PATENT ABSTRACTS OF JAPAN vol. 014, no. 037 (C-680), 24 January 1990 (1990-01-24) -& JP 01 272801 A (TAKATORI HAITETSUKU:KK;OTHERS: 01), 31 October 1989 (1989-10-31)

## Description

### Field of the invention

The present invention refers to a method for automatic pick up from a container of hosiery articles, in species socks, knee socks and the like made of knitted sponge-like cotton, wool, cotton, synthetic fibres, for their following loading on automatic finishing lines.

Furthermore the invention relates to a device that carries out this method.

### Background of the invention

In the following description, reference is made to socks, being it clear that the same method can be extended to knee socks and other hosiery articles.

In an automatic production cycle, before that a sock reaches the final packaging step, it must follow a path with various working steps.

Usually, starting from a step of automatic or manual pick up of the sock from a special container, the sock passes through intermediate steps that provide seaming, steaming, up to the final packaging.

Presently, socks are picked from special containers manually. Techniques also exist of automatic pick up by means of an automatic apparatus comprising clamping means for grasping hosiery items (see US-A-5511501) or by means of a feeding sucker that holds the articles raising them from a special container (see JP-A-1-272801). This technique, however, is indicated only for veiled articles such as collants, knee socks and stockings, which are made of thin knitted veil and are very flexible.

On the other hand, the same feeding sucker system does not allow an automatic pick up from a container of other hosiery articles, made of synthetic fibres but with thicker knitting as well as in sponge-like cotton, wool, thick cotton. For such articles, only manual loading systems are presently known.

### Summary of the invention

It is therefore object of the present invention to provide a method for automatic pick up from a container of hosiery articles, in particular socks, knee socks and the like knitted of spongy and/or wool material, which overcomes the drawback of the existing techniques.

It is, furthermore, an object of the invention to provide a device that carries out this method.

The pick up method according to the invention is disclosed in claim 1. Said method provides the use of a grasping device moving from a starting position. The free end of the grasping device, comprising grasping jaws, is approached gradually to the bulk of socks gathered in a container located underneath. The grasping device is suspended to an end of an actuator, but is not integral to it so that as soon as the jaws contact the free surface of the bulk of socks, the actuator continues for a brief additional stroke. In particular, the additional stroke causes the grasping device to contact to socks without stopping the lowering of the jaws even after a first contact with the free surface of the bulk of socks.

The end of the brief additional stroke, i.e. when the actuator has approached the grasping device, or the beginning of the additional stroke, i.e. when the actuator starts the approaching movement to the grasping device, are detected automatically, since they represent with certainty the achievement by the grasping device of the bulk of socks, whichever is the level of the socks in the container. At this point, when the fact that the support is close to the grasping device has been detected, or after having detected the beginning of the approaching movement of the support to the grasping device, the jaws are closed automatically grasping at least one sock. Then, the whole device by means of the actuator is moved from the pick up position to an unloading position. In this position the jaws release the sock on a loading plane of a finishing machine. Then, the whole device turns back quickly to the starting position above the container for a next picking up step.

According to another aspect of the invention, a device for automatic pick up from a container of a sock or similar articles comprises the features according to claim 2.

Preferably, the sensor means comprise proximity sensors integral to the support that detect the vicinity of the grasping device within a predetermined range. In this case, advantageously, a mechanical pawl is provided that prevents the grasping device from contacting the sensors integral to the actuator.

Alternatively, the sensor means comprise proximity sensors integral to the support that detect the passage of the sliding guide with respect to the support. In this case, the contact of the grasping device with the socks is detected before that the grasping device stops its approaching to the actuator.

In particular, the signals coming from the sensor means cause only the closure of the jaws for grasping the socks. The following opening movement of the jaws is operated by the control unit at the unloading station where the sock is released.

The grasping means can comprise a couple of jaws operated by pneumatic means, a control unit being provided for operating said pneumatic means responsive to signals coming from the sensor means.

Advantageously, the grasping device provides a opening adjustment device of the jaws that adjusts the maximum opening of the jaws with respect to a longitudinal axis of the device for preferably picking up a sock at a time.

### Brief description of the drawings

Further characteristics of the method and of the device according to the present invention for automatic pick up of hosiery articles will be made clearer with the following description of an embodiment thereof, exemplifying but not limitative, with reference to the attached drawings, wherein:
- figure 1 shows an elevational view of a device for automatic pick up of a sock from a container;
- figures from 2 to 5 show a diagrammatical view following positions of the device of figure 1, with grasping a sock and its loading on a conveyor belt;
- figure 6, shows diagrammatically the succession of steps of figures from 1 to 5;
- figure 7 shows an embodiment of the device of figure 1 with different location of the sensor means.

### Description of the preferred embodiment

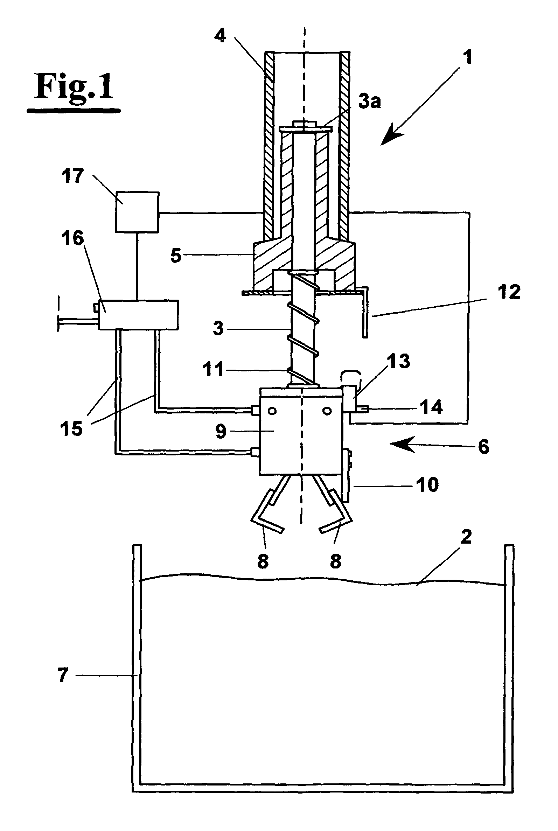

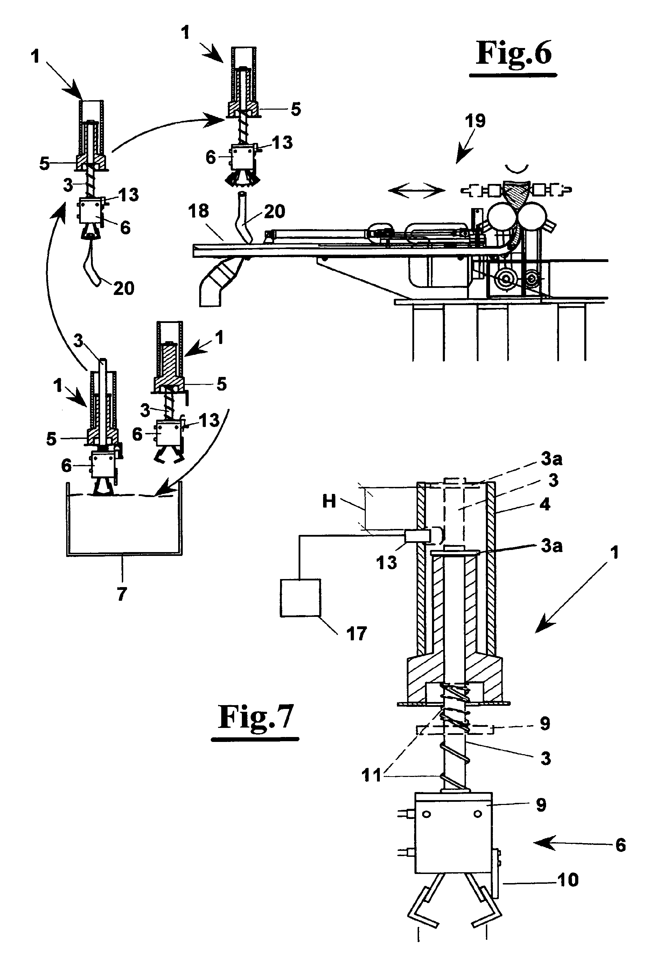

With reference to figure 1, for an automatic pick up of a sock 2 from a container 7 a device 1 is provided comprising a stem 4 of an actuator, for example an articulated arm, having at the distal end a support 5 to which a grasping device 6 is suspended. More precisely, a guiding rod 3 is provided on which grasping device 6 slides with respect to support 5, whereby the grasping device is normally suspended to support 5 spaced at a maximum distance corresponding to the length of the guiding rod 3, and can be pushed upwardly from below to approach support 5, against a spring 11. Grasping device 6 consists in two jaws 8 and a body 9 that contains pneumatic parts that operate the jaws 8, with air supplied through ducts 15 by a double-acting valve 16, operated by a control unit 17. Control unit 17 receives signals from a proximity sensor 13 integral to grasping device 6 and oriented towards the above, in order to measure the vicinity to support 5 within a predetermined range. Obviously, sensor 13 may also be mounted on support 5 for measuring the vicinity to grasping device 6 located underneath. Furthermore, it may be mounted in the position of figure 7 described hereinafter.

Always with reference to figure 1, in use the stem 4 is positioned with grasping device 6 above container 7 with the socks that reach a level 2. At first, the jaws is in an open position, suspended to support 5 by means of guiding rod 3, which has a flange 3a at the free end. The maximum opening of the jaws 8, with respect to the vertical axis of grasping device 6, is set manually by an adjusting device 10.

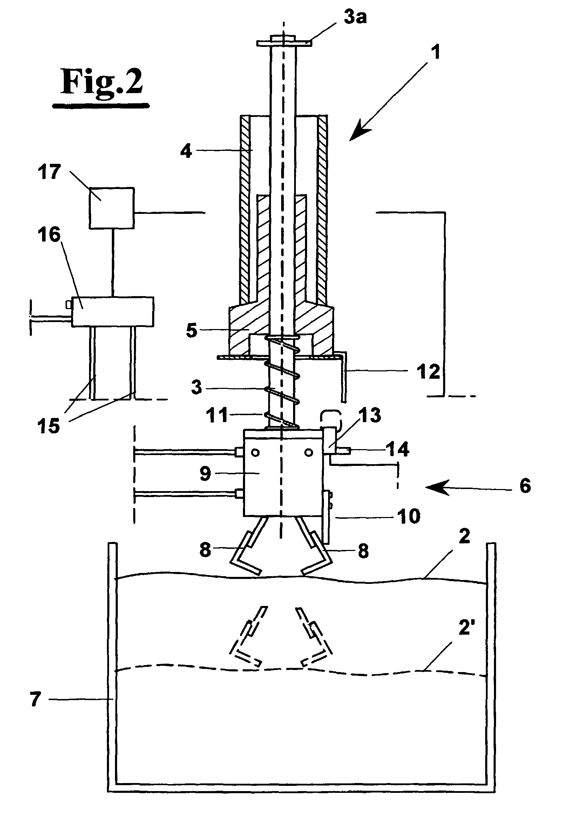

Then, as shown in figure 2, there is the first contact of grasping device 6 with the socks 2. In this position the jaws 8 could already grasp a sock. However, since the level of socks is variable and might for example be in the position 2', the level of first contact cannot be foreseen.

Therefore, according to the invention, the movement towards below continues and the movement of grasping device 6 stops smoothly on the surface of socks 2, wherever it is, without momentarily affecting this movement. After the contact of grasping device 6 with the surface of the socks, a relative movement thereof with respect to support 5 starts, owing to the push of stem 4 towards below even after the first contact of grasping device 6 with the socks. More precisely, support 5 tends to compress spring 11 in order to approach further and further grasping device 6.

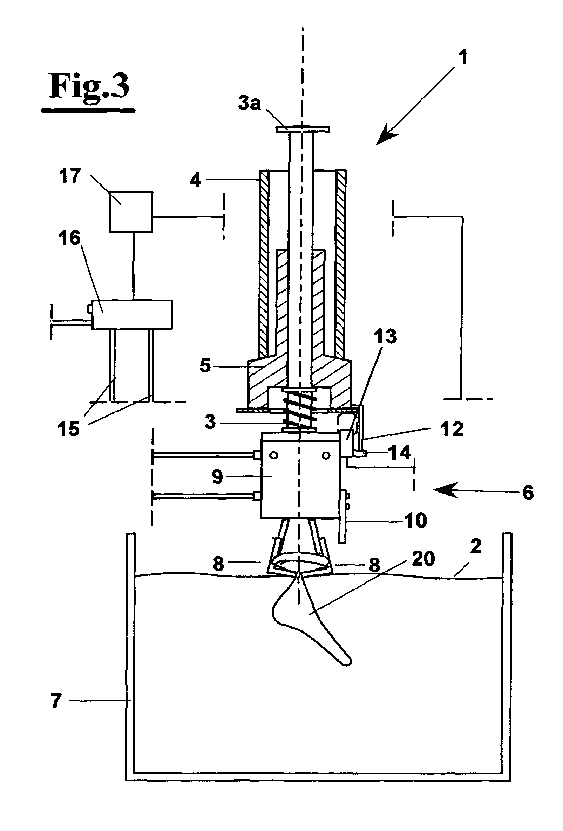

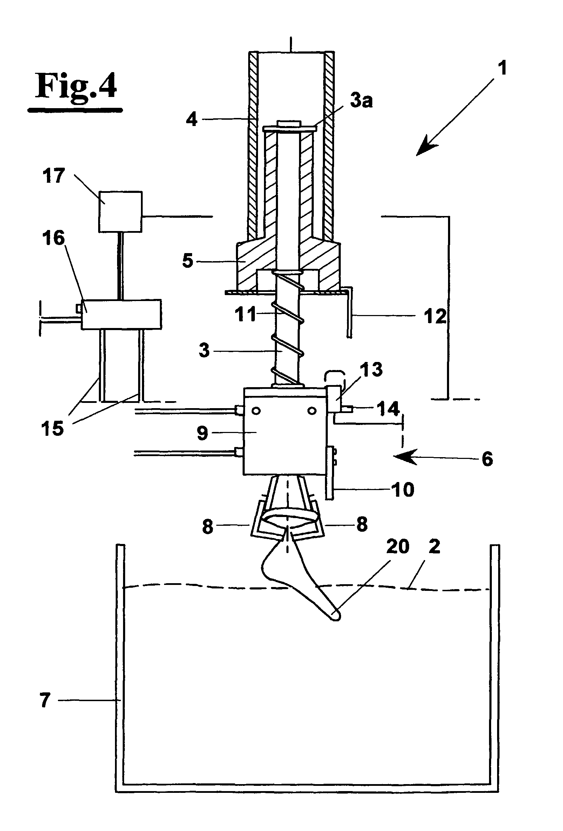

As shown by figure 3, the lowering of support 5 continues up to the detection of its presence by proximity sensor 13. A pawl 12 is provided that prevents support 5 and grasping device 6 to contact each other. In fact, an abutment 14 limits the movement of support 5 towards grasping device 6 by hitting pawl 12.

At the detection of the presence of support 5, control unit 17 opens valve 16 and, through one of ducts 15, it operates the closure of the jaws 8. In other words, as clearly visible in figure 3, when grasping device 6 pushes with jaws 8 onto socks 2, sensor 13 detects the presence of support 5, whereby through the actuating parts 9 the jaws 8 are closed in order to grasp sock 20.

After grasping sock 20, spring 11 is released, thus spacing support 5 from grasping device 6. Grasping device 6 is again suspended by means of guiding rod 3 to support 5 and can be raised together with sock 20 from the mass 2 of socks present in container 7. The jaws 8 continue to remain closed even if sensor 13 is spaced from support 5.

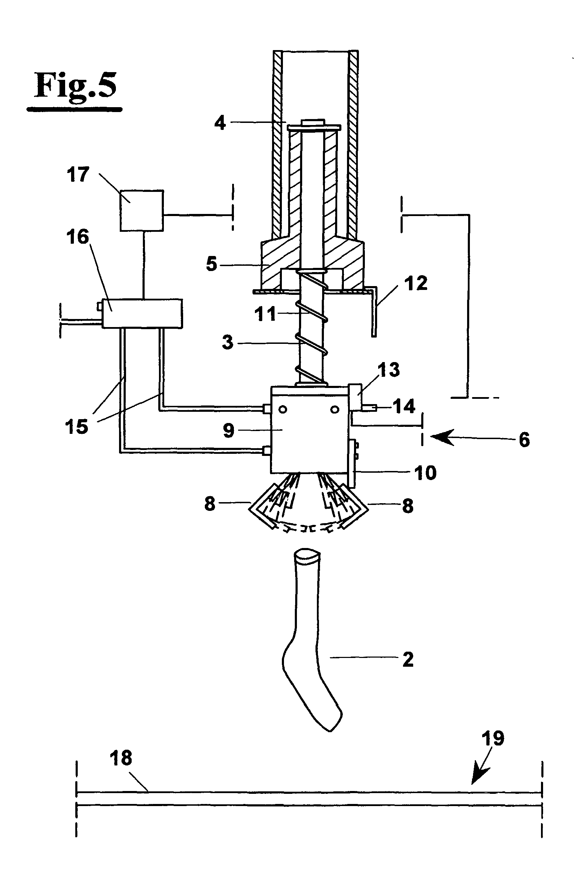

As shown in figure 5, the device 1 with sock 20 is moved to an unloading position, where the jaws are opened by unit 17. The sock 20, then, is unloaded for example on a conveyor belt 18 of a finishing line 19, for the successive steps of the production cycle. In figure 6 the steps above described are shown.

Notwithstanding reference has been made to the detection of the position of contact of jaws 8 with socks 2 by means of a sensor 13 mounted on grasping device 6, it is not excluded that sensor 13 is mounted in way different than that shown in the above figures, for example on support 5. In particular, with reference to figure 7, sensor 13 can be mounted in order to detect the movement of flange 3a. This way, the signal of achievement by grasping device 6 of the surface 2 of the socks, transmitted to the microprocessor through the bus that connects to the sensor, can start well before that grasping device 6 approaches support 5. In this case, there is the advantage that the stop of the actuator 4 can be carried out after an additional path H, before that grasping device 6 ends the sliding stroke, owing to a delay between the signal of the processor 17 and the actual stop. This avoids the problem of break of the grasping device against the bottom of the container 7 if the level 2 of socks is close to the bottom same.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for automatic pick up from a container (7) of hosiery articles, in species socks (2), knee socks and the like, made of thick knitted material, **characterised in that** it comprises the steps of:
- handling by means of an actuator (4) a grasping device (6) starting from an initial position, said grasping device (6) being suspended to a support (5) integral to said actuator (4) at a predetermined distance from it whereby said grasping device (6) can be pushed to approach said support (5);
- moving the actuator (4), and the grasping device (6) to it suspended, above a container (7) containing a bulk of socks (2);
- lowering the actuator (4) and the grasping device (6) to it suspended until said grasping device (6) contacts the free surface of the bulk of socks (2), said actuator (4) continuing to be lowered according to a brief additional stroke, said grasping device (6) delaying the closure even after a first contact with the free surface of socks (2), whereby at the end of said additional stroke said support (5) being approached to said grasping device (6);
- detection of the presence of the support (5) approached to the grasping device (6) and subsequent closure of it onto socks (2) grasping at least one sock (20) ;
- movement of the grasping device (6) by means of the actuator (4) from a pick up position to an unloading station where said grasping device (6) opens and releases the sock (20) on a loading plane of a finishing machine;
- back stroke of the grasping device (6) to a starting position above the container (7) for a next picking up step.

2. A device for automatic pick up from a container (7) of hosiery articles, in species socks (2) of knitted material, **characterised in that** it comprises:
- a support (5) integral to an actuator (4) said support (5) and actuator (4) being movable in respect to said container;
- at least a grasping device (6) having grasping means (8);
- a sliding guide within said support (5) ollowing a sliding movement of said grasping device (6) with respect to said support (5), wherein said grasping device (6) is suspended to said support (5) at predetermined distance from it and can be pushed along said sliding guide to approach said support (5);
- proximity sensor means (13), which detect the approaching of said grasping device (6) to said support (5);
- means (9) for actuating said grasping means (8) responsive to said proximity sensor means (13).

3. Device according to 2, wherein said means for actuating (9) said grasping means (8) comprise pneumatic means (15,16) operated by a control electronic unit (17) for operating said pneumatic means (16) responsive to signals coming from the sensor means (13).

4. Device according to claim 2, wherein the sensor means comprise sensors (13) of proximity that detect the vicinity of the grasping device (6) to the support (5) within a predetermined range.

5. Device according to claim 4, wherein a mechanical pawl (12) is provided that prevents the grasping device (6) and the support (5) from contacting directly.

6. Device according to claim 2, wherein the sensor means comprise proximity sensors (13) that detect the passage of a guiding rod (3) connected to said grasping means (6) and sliding along said sliding guide, whereby the contact of the grasping device (6) with the socks (2) is detected before that the grasping device (6) stops its approaching movement to the support (5).

7. Device according to claim 2, wherein said grasping device (6) has adjusting means (10) that adjusts the maximum opening for picking up a sock (20) at a time.

8. Device according to claim 2, wherein said grasping means comprise a couple of jaws (8).

9. Device according to claim 2, wherein said sensor means (13) are chosen among: optical, mechanical, pneumatic, electrical, magnetic.

## Patentansprüche

1. Verfahren zum automatischen Entnehmen von Strumpfwaren, insbesondere Socken (2), Kniestrümpfen und Ähnlichem, hergestellt aus dickem Strickmaterial, aus einem Behälter (7), **dadurch gekennzeichnet, dass** es die und umfassend folgende Schritte umfasst:
- Führen einer Greifvorrichtung (6) mittels einer Stelleinheit (4) von einer Anfangsposition aus, wobei die Greifvorrichtung (6) an einem Trägerteil (5) befestigt ist, die Teil der Stelleinheit (4) ist, in einem vorgegebenen Abstand von dieser, wobei die Greifvorrichtung (6) die angetrieben werden kann, um das Trägerteil (5) anzufahren
- Bewegen der Stelleinheit (4) und der daran befestigten Greifvorrichtung (6), über einem Behälter (7), der eine Menge Socken (2) enthält;
- Absenken der Stelleinheit (4) und der daran befestigten Greifvorrichtung (6), bis die Greifvorrichtung (6) die freie Oberfläche der Menge an Socken (2) berührt, wobei die Stelleinheit (4) weiterhin gemäß einer kurzen, zusätzlichen Bewegung abgesenkt wird, wobei die Greifvorrichtung (6) das Schließen, selbst nach einer ersten Berührung mit der freien Oberfläche der Socken (2) verzögert, so dass am Ende der zusätzlichen Bewegung des Trägerteils (5) sich der Greifvorrichtung (6) nähert;
- Erfassen des Trägerteil (5), die sich der Greifvorrichtung (6) angenähert hat, und anschließende Schließung der Greifvorrichtung um die Socken (2), wobei mindestens eine Socke (20) gegriffen wird;
- Bewegung der Greifvorrichtung (6) mittels der Stelleinheit (4) aus einer Entnahmeposition zu einer Entladeposition, an der sich die Greifvorrichtung (6) öffnet und die Socke (20) auf der Ladefläche einer Endbearbeitungsmaschine ablegt;
- Rückwärtsbewegung der Greifvorrichtung (6) in die Startposition über dem Behälter (7) für den nächsten Schritt der Entnahme.

2. Vorrichtung zum automatischen Entnehmen von Strumpfwaren, insbesondere Socken (2), aus Strickmaterial aus einem Behälter (7), **dadurch gekennzeichnet dass** Sie Folgendes umfasst:
- ein Trägerteil (5), das Teil der Stelleinheit (4) ist, wobei das Trägerteil (5) und die Stelleinheit (4) relativ zum Behälter bewegt werden können;
- mindestens eine Greifvorrichtung (6), die Greifmittel (8) aufweist;
- eine Gleitführung an das Trägerteil (5), die eine Gleitbewegung der Greifvorrichtung (6) ermöglicht, relativ zum Trägerteil (5), wobei die Greifvorrichtung (6) in einem vorgegebenen Abstand an das Trägerteil (5) befestigt ist und entlang der Gleitführung angetrieben werden kann, um sich dem Trägerteil (5) zu nähern;
- Annäherungssensoren (13), die das Annähern der Greifvorrichtung (6) an das Trägerteil (5) erkennen;
- Mittel (9) zum Auslösen der Greifmittel (8), die auf die Annäherungssensoren (13) reagieren.

3. Vorrichtung nach Anspruch 2, **Dadurch gekennzeichnet, dass** das Mittel zum Auslösen (9) der Greifmittel (8) pneumatische Mittel (15, 16) umfasst, die von einer elektronischen Kontrolleinheit (17) gesteuert werden, zum Steuern der pneumatischen Mittel (16), die auf Signale der Sensoren (13) reagieren.

4. Vorrichtung nach Anspruch 2, **dadurch gekennzeichnet, dass** die Sensoren Annäherungssensoren (13) umfassen, die die Nähe des Greifvorrichtung (6) zu dem Trägerteil (5) innerhalb eines vorbestimmten Bereichs erkennen.

5. Vorrichtung nach Anspruch 4, **dadurch gekennzeichnet, dass** eine mechanische Klinke (12) bereitgestellt wird, die verhindert, dass die Greifvorrichtung (6) und das Trägerteil (5) sich direkt berühren.

6. Vorrichtung nach Anspruch 2, **dadurch gekennzeichnet, dass** die Sensoren Annäherungssensoren (13) umfassen, die die Bewegung einer Führungsstange (3) erkennen, die mit der Greifvorrichtung (6) verbunden ist und entlang der Gleitführung gleitet, wobei die Berührung der Greifvorrichtung (6) mit den Socken (2) erkannt wird, bevor die Greifvorrichtung (6) seine Annäherungsbewegung in Richtung des Trägerteils (5) beendet.

7. Vorrichtung nach Anspruch 2, **dadurch gekennzeichnet, dass** die Greifvorrichtung (6) Einstellmittel (10) aufweist, die die maximale Öffnung zum Entnehmen jeweils einer Socke (20) einstellen.

8. Vorrichtung nach Anspruch 2, **dadurch gekennzeichnet, dass** die Greifvorrichtung einige Klemmbacken (8) umfasst.

9. Vorrichtung nach Anspruch 2, **dadurch gekennzeichnet, dass** die Sensoren (13) ausgewählt werden aus: optischen, mechanischen, pneumatischen, elektrischen, magnetischen Sensoren.

## Revendications

1. Procédé de prélèvement automatique depuis un conteneur (7) d'articles de bonneterie, en particulier de chaussettes (2), mi-bas et similaires, composés de tissu à mailles épais, **caractérisé en ce qu'**il comprend :
- la manoeuvre au moyen d'un actionneur (4) d'un dispositif de préhension (6) partant d'une position initiale, ledit dispositif de préhension (6) étant suspendu à un support (5) intégré audit actionneur (4) à une distance prédéterminée de celui-ci, moyennant quoi ledit dispositif de préhension (6) peut être poussé pour approcher ledit support (5) ;
- le déplacement de l'actionneur (4) et du dispositif de préhension (6) suspendu à celui-ci au-dessus d'un conteneur (7) contenant un volume de chaussettes (2) ;
- l'abaissement de l'actionneur (4) et du dispositif de préhension (6) suspendu à celui-ci jusqu'à ce que ledit dispositif de préhension (6) vienne en contact avec la surface libre du volume de chaussettes (2), ledit actionneur (4) continuant à être abaissé selon une brève course supplémentaire, ledit dispositif de préhension (6) retardant la fermeture même après un premier contact avec la surface libre de chaussettes (2), moyennant quoi à l'extrémité de ladite course supplémentaire, ledit support (5) étant approché dudit dispositif de préhension (6) ;
- la détection de la présence du support (5) approché du dispositif de préhension (6) et la fermeture successive de celui-ci sur les chaussettes (2) saisissant au moins une chaussette (20) ;
- le mouvement du dispositif de préhension (6) au moyen de l'actionneur (4) d'une position de prélèvement à une station de déchargement où ledit dispositif de préhension (6) s'ouvre et libère la chaussette (20) sur un plan de chargement d'une machine de finissage ;
- la course de retour du dispositif de préhension (6) vers une position de départ au-dessus du conteneur (7) pour une prochaine étape de prélèvement.

2. Dispositif de prélèvement automatique depuis un conteneur (7) d'articles de bonneterie, en particulier de chaussettes (2) composées de tissu à mailles, **caractérisé en ce qu'**il comprend :
- un support (5) intégré à un actionneur (4), ledit support (5) et l'actionneur (4) étant mobiles par rapport audit conteneur ;
- au moins un dispositif de préhension (6) ayant un moyen de préhension (8) ;
- un guide coulissant dans ledit support (5) permettant un mouvement coulissant dudit dispositif de préhension (6) par rapport audit support (5), dans lequel ledit dispositif de préhension (6) est suspendu audit support (5) à une distance prédéterminée de ce dernier et peut être poussé le long dudit guide coulissant pour approcher ledit support (5) ;
- des moyens de détection de proximité (13) qui détectent l'approche dudit dispositif de préhension (6) par rapport audit support (5) ;
- un moyen (9) pour actionner ledit moyen de préhension (8) en réponse auxdits moyens de détection de proximité (13).

3. Dispositif selon la revendication 2, dans lequel ledit moyen pour actionner (9) ledit moyen de préhension (8) comprend un moyen pneumatique (15, 16) commandé par une unité de commande électronique (17) pour commander ledit moyen pneumatique (16) en réponse aux signaux venant des moyens de détection (13).

4. Dispositif selon la revendication 2, dans lequel les moyens de détection comprennent des capteurs (13) de proximité qui détectent la proximité du dispositif de préhension (6) par rapport au support (5) dans un intervalle prédéterminé.

5. Dispositif selon la revendication 4, dans lequel un cliquet mécanique (12) est prévu pour empêcher le contact direct du dispositif de préhension (6) avec le support (5).

6. Dispositif selon la revendication 2, dans lequel les moyens de détection comprennent des capteurs de proximité (13) qui détectent le passage d'une tige de guidage (3) reliée audit moyen de préhension (6) et coulissant le long dudit guide coulissant, moyennant quoi le contact du dispositif de préhension (6) avec les chaussettes (2) est détecté avant que le dispositif de préhension n'arrête son mouvement d'approche vers le support (5).

7. Dispositif selon la revendication 2, dans lequel ledit dispositif de préhension (6) a un moyen de réglage (10) qui règle l'ouverture maximale pour prélever une chaussette (20) à la fois.

8. Dispositif selon la revendication 2, dans lequel ledit moyen de préhension comprend un couple de pinces (8).

9. Dispositif selon la revendication 2, dans lequel lesdits moyens de détection (13) sont choisis parmi des moyens : optiques, mécaniques, pneumatiques, électriques, magnétiques.
